(19) **Europäisches Patentamt**

**European Patent Office**

**Office européen des brevets**

(11) Veröffentlichungsnummer : **0 057 373**
**B1**

(12) **EUROPÄISCHE PATENTSCHRIFT**

(45) Veröffentlichungstag der Patentschrift :
30.10.85

(21) Anmeldenummer : **82100358.9**

(22) Anmeldetag : **20.01.82**

(51) Int. Cl.⁴ : **F 16 L 21/06, B 21 D 53/00**

(54) **Spannmuffe für Rohre.**

(30) Priorität : **29.01.81 DE 3102855**

(43) Veröffentlichungstag der Anmeldung :
**11.08.82 Patentblatt 82/32**

(45) Bekanntmachung des Hinweises auf die Patenterteilung : **30.10.85 Patentblatt 85/44**

(84) Benannte Vertragsstaaten :
**AT BE CH DE FR GB IT LI LU NL SE**

(56) Entgegenhaltungen :
DE-A- 1 923 950
DE-A- 2 517 808
DE-A- 2 731 464
DE-A- 2 926 626
DE-U- 6 949 978
FR-A- 2 160 232
US-A- 4 026 586
US-A- 4 142 743
US-E- 30 042
G. Niemann "Maschinenelemente", erster Band,
Springer Verlag 1961, S. 20, Bild 2/11

(73) Patentinhaber : **MAGE AG**
**Industriestrasse**
**CH-1781 Courtaman (CH)**

(72) Erfinder : **Gehring, Manfred**
**En Paverz**
**CH-1787 Môtier-Fribourg (CH)**

(74) Vertreter : **Patentanwälte Kohler - Schwindling - Späth**
**Hohentwielstrasse 41**
**D-7000 Stuttgart 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft eine Spannmuffe für Rohre, bestehend aus einem gummielastischen Dichtungsring und einem den Dichtungsring umgebenden Spannring in Form eines kreisförmig gebogenen Blechstreifens, an dessen einander gegenüberstehenden Enden radial nach außen gerichtete Laschen angebogen sind, die Bohrungen für Spannschrauben aufweisen, und an deren Außenseiten je eine Spannplatte anliegt, von denen die eine Durchgangsbohrungen und die andere Gewindebohrungen für die Spannschrauben aufweist.

Eine solche Spannmuffe ist aus der DE-U-6 949 978 bekannt. Die an den abgebogenen Laschen des Spannringes anliegenden Spannplatten weisen in der Mitte einen Durchzug auf, mit dem sie mit der zugeordneten Lasche fest verbunden, nämlich vernietet sind. Hierdurch wird die Lage der Laschen stabilisiert, so daß sie im wesentlichen der Bewegung der Spannplatten folgen müssen, welche durch die Spannschrauben einigermaßen parallel zueinander gehalten werden. Andernfalls würde die Gefahr bestehen, daß die Laschen beim Zusammenziehen der Spannplatten gegen den Rohrumfang gedrückt werden und im Bereich der Durchgangslöcher ausreißen, so daß eine einwandfreie Spannwirkung nicht erzielt werden kann. Die feste Verbindung zwischen den Spannplatten und den Laschen ist insofern zwar wirksam, jedoch erfordert sie zusätzliche Arbeitsgänge, die bei einem Massenartikel, wie es eine solche Spannmuffe ist, einen beträchtlichen zusätzlichen Aufwand bedeuten.

Aus der DE-A-2731 464 ist eine Spannmuffe mit einem Spannring bekannt, der an seinen Enden nicht radial nach außen gerichtete Laschen aufweist, sondern im Bogen nach hinten auf die Außenseite des Spannringes zurückgeführte Abschnitte, deren Ränder mit dem Spannring verschweißt sind. Es werden auf diese Weise Ösen gebildet, in die mit Durchgangsbohrungen bzw. Gewindebohrungen versehene Spannstangen eingesteckt sind. Hierdurch wird eine sehr stabile Anordnung erzielt, die allerdings wiederum zusätzliche Arbeitsgänge erfordert und daher kostenaufwendig ist. Im übrigen hat der Spannring radial nach innen abgewinkelte Ränder, die einem seitlichen Abgleiten des Spannringes vom Dichtungsring entgegenwirken.

Bei der Anwendung solcher Spannmuffen ergibt sich ein Problem aus der Tatsache, daß die miteinander zu verbindenden Rohre gleicher Nennweite erhebliche Durchmesserunterschiede aufweisen können. Eine einwandfreie Abdichtung erfordert dann ein stärkeres Zusammenziehen des Spannringes über dem dünnen Rohr, wodurch es zu erheblichen Spannungen im Bereich der Verschraubung des Spannringes und zu Schwierigkeiten beim Herstellen einer einwandfreien und dauerhaften Verbindung kommt.

Der Erfindung liegt demnach die Aufgabe zugrunde, eine Spannmuffe für Rohre der eingangs beschriebenen Art so auszubilden, daß sie eine sichere Verbindung auch von Rohren mit unterschiedlichen, wenn auch noch im zulässigen Toleranzbereich liegenden Durchmessern gestattet.

Diese Aufgabe wird nach der Erfindung dadurch gelöst, daß die Längsränder des Spannringes radial nach innen abgewinkelte Stege bilden, die an den Stirnflächen des Dichtungsringes anliegen, und die Laschen in ihrer Mitte geteilt sind und die Spannplatten eine entsprechende Aussparung aufweisen.

Durch das Teilen der Laschen erhalten die nebeneinander liegenden Abschnitte des Spannringes mehr Bewegungsfreiheit, um sich den Rohrdurchmessern anpassen zu können und einen Ausgleich von Durchmesser-Unterschieden zwischen den miteinander zu verbindenden Rohren zu ermöglichen, ohne daß übermäßige Spannungen auftreten. Die Aussparungen in den Spannplatten ermöglichen auch hier notwendige Verformungen, ohne die Ausübung der gewünschten Spannkräfte zu beeinträchtigen. Die nach innen abgewinkelten Ränder gewährleisten dem Spannband trotz auftretender Verformungen einen einwandfreien Sitz auf dem Dichtungsring.

Bei einer bevorzugten Ausführungsform einer solchen Spannmuffe sind die Bohrungen in den Spannplatten im Bereich von ausgestülpten Tüllen angeordnet, die in die Bohrungen der Laschen des Spannringes eingreifen. Auf diese Weise werden die Spannplatten in ihrer Lage relativ zu den Laschen fixiert, und es wird gleichzeitig vermieden, daß die Spannschrauben mit ihren Gewinden mit den Rändern der Löcher in den dünnen Laschen in Eingriff kommen können.

In die von den Laschen und den angrenzenden Abschnitten des Blechstreifens gebildeten Ecken können versteifende Sicken eingeprägt sein. Weiterhin können die Spannplatten auch an ihrem Rand Aussparungen zur Aufnahme der die Laschen versteifenden Sicken aufweisen. Auf diese Weise ist es möglich, die Laschen so auszubilden, daß sie nahezu bis an den Mantelabschnitt des Spannringes heranreichen.

Der Spalt zwischen den Enden des Spannringes kann von einer an den Innenseiten des Spannringes anliegenden Brücke überbückt sein. Diese Brücke kann insbesondere von einem mit einem Ende des Spannringes verschweißten Blechteil gebildet werden. Bei der Verschweißung kann es sich um eine einfache Punktschweißung handeln, weil sie nur den Zweck hat, die Brücke am Spannring zu fixieren. Irgendwelchen Belastungen ist diese Schweißstelle nicht ausgesetzt. Grundsätzlich könnte die Brücke auch lose zwischen den Spannring und den gummielastischen Dichtungsring eingelegt sein. Sie hat im wesentlichen nur den Zweck, bei der Montage das Herausquellen des gummielastischen Dichtungsringes aus der Fuge zwischen den Enden des Spannringes zu verhindern.

Wenn die Spannmuffe für Rohre sehr großen Durchmessers bestimmt ist, kann der Spannring aus zwei jeweils annähernd einen Halbkreis bildenden Teilen bestehen, die beide an ihren Enden angebogene Laschen aufweisen, an denen je eine Spannplatte anliegt. Am grundsätzlichen Aufbau der Spannmuffe und an der Ausbildung des Spannringes ändert sich dadurch prinzipiell nichts. Es versteht sich, daß dann auch zwei Brücken Anwendung finden können, um die beiden Spalten zu schließen, die an den beiden Enden der beiden Teile des Spannringes vorhanden sind.

Die Herstellung eines Spannringes, bei dem die an den Enden vorhandenen Laschen angebogen sind und gleichzeitig die Längsränder radial nach innen abgewinkelte Stege bilden, ist nicht ohne weiteres möglich, da das Anbiegen der Laschen vor dem Biegen des Spannringes in die Kreisform diesen Biegevorgang stört, während andererseits das Anbiegen der Laschen nach dem Biegen des Ringes auch nicht mehr ohne weiteres möglich ist, weil dann die die Laschen bildenden Enden des Ringes einander überlappen und zum Biegen nicht mehr ohne weiteres zugänglich sind. Daher umfaßt die Erfindung auch ein Verfahren, das die einfache und rationelle Herstellung des Spannringes der erfindungsgemäßen Spannmuffe ermöglicht. Dieses Verfahren besteht darin, daß in einem ersten Arbeitsgang ein Blechstreifen, der an seinen Enden je zwei zungenartige Abschnitte und an seinen seitlichen Rändern über die zungenartigen Abschnitte überstehende Randabschnitte aufweist, ausgeschnitten und im Bereich der zungenartigen Abschnitte gelocht wird, daß dann unter gleichzeitigem Abwinkeln der Randabschnitte und der zungenartigen Abschnitte der Blechstreifen zu zwei Halbschalen gebogen wird und danach die beiden Halbschalen in eine kreisrunde Form fertig gebogen werden, derart, daß beim Biegen der Halbschalen nur die in deren Bereich liegenden Abschnitte der Ränder und erst beim Fertigbiegen der Halbschalen zur kreisrunden Form die im Übergangsbereich zwischen den beiden Halbschalen liegenden Randabschnitte abgewinkelt werden.

Das Biegen des zugeschnittenen und gelochten Blechbandes zu zwei Halbschalen mit abgewinkelten Rändern und Laschen, vorzugsweise unter gleichzeitigem Einprägen versteifender Sicken in die von den abgewinkelten Laschen und den angrenzenden Abschnitten des Blechstreifens gebildeten Ecken, kann unter Anwendung eines geeigneten, Matrize und Stempel umfassenden Presswerkzeuges erfolgen, das unter gleichzeitigem Abwinkeln der Ränder und Laschen sowie Einprägen der Sicken das gelochte Blechband zu den beiden Halbschalen formt. Das Fertigbiegen kann dann mit Hilfe eines Werkzeuges erfolgen, welches nur in den mittleren Abschnitt zwischen den beiden Halbschalen eingreift und daher mit den Enden der Halbschalen, welche die abgewinkelten Laschen aufweisen, nicht mehr in Eingriff kommt.

Wenn der Spannring soweit fertiggestellt ist, kann mit einem Ende des fertig gebogenen Spannringes ein an dessen Innenseite anliegendes Blechteil verschweißt werden, das zuvor kreisbogenförmig gebogen und gegebenenfalls mit eingeprägten Sicken versehen worden ist und den Spalt zwischen den Enden des Spannringes überbrückt.

Es versteht sich, daß bei einem zweiteiligen Spannring, bei dem die einzelnen Teile jeweils nur eine Halbschale bilden, diese Halbschale in einem einzigen Arbeitsgang herstellbar ist und dann zweckmäßig jedes Teil an einem Ende mit einem die Brücke bildenden Blechteil verschweißt werden kann.

Weitere Einzelheiten und Ausgestaltungen der Erfindung ergeben sich aus der folgenden Beschreibung der in der Zeichnung dargestellten Ausführungsbeispiele. Es zeigen :

Figur 1  die Seitenansicht einer Spannmuffe nach der Erfindung,

Figur 2  einen Schnitt längs der Linie II-II durch die Spannmuffe nach Fig. 1,

Figur 3  die Seitenansicht einer Spannmuffe mit zweiteiligem Spannring,

Figur 4  die Draufsicht auf einen Blechstreifen zur Herstellung des Spannringes der Spannmuffe nach Fig. 1,

Figur 5  die Seitenansicht des zu zwei Halbschalen verformten Blechstreifens nach Fig. 4,

Figur 6  eine Draufsicht auf das die Brücke des Spannringes nach Fig. 1 bildenden Blechteiles,

Figur 7  eine Seitenansicht des Blechteiles nach Fig. 6 in Richtung des Pfeiles VII,

Figur 8  die Draufsicht auf die Spannplatte der Spannmuffe nach Fig. 1 und

Figur 9  eine Seitenansicht der Spannplatte nach Fig. 8 in Richtung des Pfeiles IX.

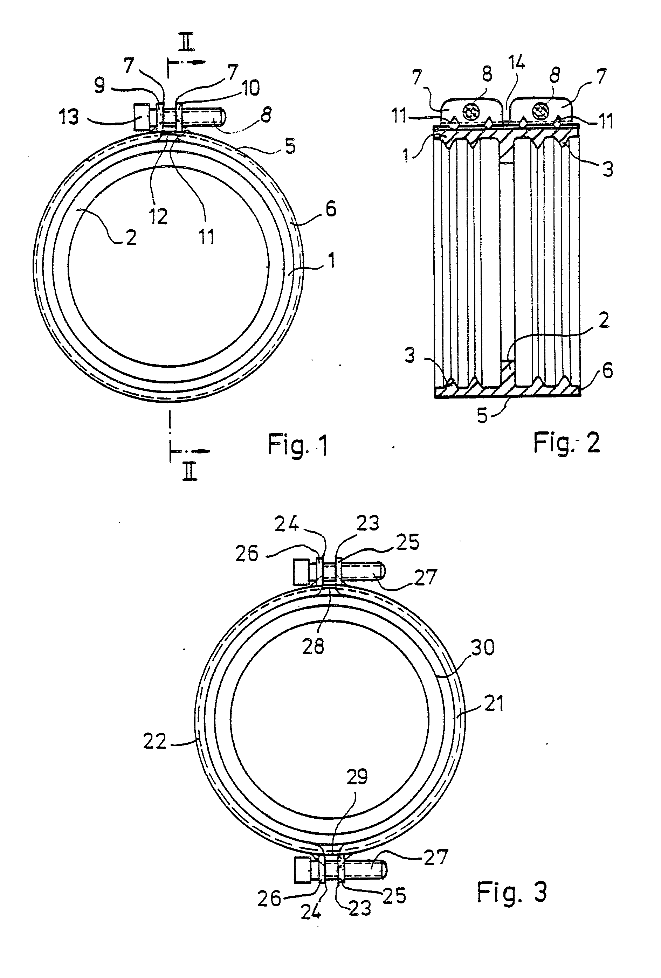

Die in den Fig. 1 und 2 dargestellte Spannmuffe weist einen gummielastischen Dichtungsring 1 auf, der in seiner zu seiner Achse senkrechten Mittelebene einen radial nach innen vorspringenden Steg 2 besitzt, an den die Enden zweier zusammenzufügender Rohre anstoßen. Zu beiden Seiten dieses Steges 2 weist der Dichtungsring 1 an seiner Innenseite Dichtungslippen 3 auf, die sich an den Umfang der zusammenzufügenden Rohre dichtend anlegen. Dieser Dichtungsring ist von einem Spannring 5 umgeben, der aus einem kreisförmig gebogenen Blechstreifen besteht, dessen Längsränder radial nach innen abgewinkelte Stege 6 bilden, die an den beiden Stirnflächen des Dichtungsringes 1 anliegen und somit den Dichtungsring einschließen. Der Spannring 5 weist an seinen einandergegenüberstehenden Enden nach außen abgewinkelte Laschen 7 auf, die Durchgangsbohrungen für Spannschrauben 8 besitzen. An den Außenseiten dieser Laschen 7 liegen Spannplatten 9 bzw. 10 an, von denen die erste ebenfalls Durchgangsbohrungen für die Spannschraube 8 aufweist, während die andere mit entsprechenden Gewindebohrungen versehen ist. In den Ecken, die von den Laschen 7 und den angrenzenden Abschnitten des den Spannring 5 bildenden Blechstreifens gebildet werden, sind versteifende Sicken 11 eingeprägt. Diese Sicken bilden eine Art diagonal verlaufende Streben zwischen dem Blechstreifen und den abgewinkelten Laschen, welche die Laschen im rechten Winkel zu den angrenzenden Abschnitten des Blechstreifens stabilisieren. Der Spalt zwischen den beiden Enden des Spannringes 5 ist durch eine Brücke 12 überdeckt, bei der es sich um ein kreisbogenförmiges und durch Sicken versteiftes Blechteil handelt, das an der Innenseite des Spannringes anliegt und in nicht näher dargestellter Weise mit einem Ende des Spannringes verschweißt ist. Bei dem dargestellten Ausführungsbeispiel besteht der Spannring und die Brücke aus rostfreiem Stahlblech mit einer Dicke von 0,5 mm.

Beim Gebrauch werden die Enden der miteinander zu verbindenden Rohre, bei denen es sich allgemein um Abwasserrohre aus Asbestzement handeln wird, bei gelösten Spannschrauben 8 in den gummielastischen Dichtungsring 1 eingeschoben, bis sie an dem mittleren Steg 2 anschlagen. Dann werden die Spannschrauben 8 angezogen, so daß die beiden Spannplatten 9 und 10 einander genähert werden, weil die Spannschrauben 8 mit ihrem Kopf 13 an der einen Spannplatte 9 anliegen und mit der anderen Spannplatte 10 über deren Gewindebohrung in Eingriff stehen. Dadurch wird der vom Spannring umschlossene Kreis bezüglich Umfang und Durchmesser vermindert und der vom Spannring eingeschlossene Dichtungsring fest gegen den Umfang der eingeschobenen Rohrenden angepreßt. Auf diese Weise wird eine sichere und dichte Verbindung zwischen den Rohren hergestellt. Die von den Spannschrauben 8 ausgeübten Kräfte werden von den Spannplatten, bei denen es sich um relativ dicke Stahlplatten handeln kann, sicher auf die Laschen übertragen, die ihrerseits die Spannkräfte auf den Spannring selbst übertragen. Da die Spannplatten von den Spannschrauben im wesentlichen parallel zueinander gehalten sind, werden auf die Laschen keine Kräfte ausgeübt, welche eine Deformation der relativ dünnen Laschen zur Folge haben könnten. Zudem sind die Laschen durch die erwähnten, versteifenden Sicken 11 in ihrer Lage gut stabilisiert. Da die Laschen ein integraler Bestandteil des Spannringes sind, können sie sich auch bei stärkster Beanspruchung nicht lösen. Die Unterteilung der Lasche 7 in zwei durch den Spalt 14 getrennte Abschnitte und eine entsprechende Aussparung 64 (Fig. 8) in den Spannplatten 9, 10 ermöglichen dabei ein Ausgleichen von Unterschieden im Durchmesser der beiden mittels der Spannmuffe zu verbindenden Rohre. Die Brücke 12 verhindert ein Herausquellen des gummielastischen Dichtungsringes 1 aus dem Spalt zwischen den Enden des Spannringes. Dabei wird die Brücke von dem komprimierten Dichtungsring fest an die Innenseite des Spannringes 5 angedrückt, so daß es an sich einer besonderen Befestigung der Brücke nicht bedurft hätte. Die Befestigung der Brücke an einem Ende des Spannringes hat nur den Zweck, einen Verlust der Brücke zu vermeiden und die Montage der Spannmuffe durch ein Fixieren der Brücke in der gewünschten Lage zu erleichtern. Es genügt daher auch, die Brücke durch eine einfache Punktschweißung festzulegen, deren Haltbarkeit für die Funktion der Spannmuffe ohne jede Bedeutung ist.

Bei sehr großen Durchmessern der miteinander zu verbindenden Rohre und infolgedessen der Muffe kann der Spannring auch zweiteilig ausgebildet sein, wie es in Fig. 3 dargestellt ist. Der Spannring besteht demnach aus zwei voneinander getrennten, jeweils annähernd einen Halbkreis bildenden Teilen 21 und 22, die beide an ihren Enden in der vorstehend beschriebenen Weise angebogene Laschen 23 bzw. 24 aufweisen. An diesen Laschen liegen außen die beschriebenen Spannplatten 25 bzw. 26 an, mit denen Spannschrauben 27 zusammenwirken. Ferner ist an jedem Teil 21 bzw. 22 eine Brücke 28 bzw. 29 befestigt, welche den Spalt zwischen den jeweils benachbarten Enden der beiden Teile 21 und 22 überbrücken. Der Dichtungsring 30 dieser Spannmuffe hat den gleichen Aufbau wie der Dichtungsring 1 der Spannmuffe nach den Fig. 1 und 2. Ebenso ist die Spannmuffe nach Fig. 3 bezüglich ihrer Anwendung und Wirkungsweise mit der Spannmuffe nach den Fig. 1 und 2 identisch, abgesehen davon, daß in diesem Fall zwei Sätze von Spannschrauben 27 angezogen werden müssen.

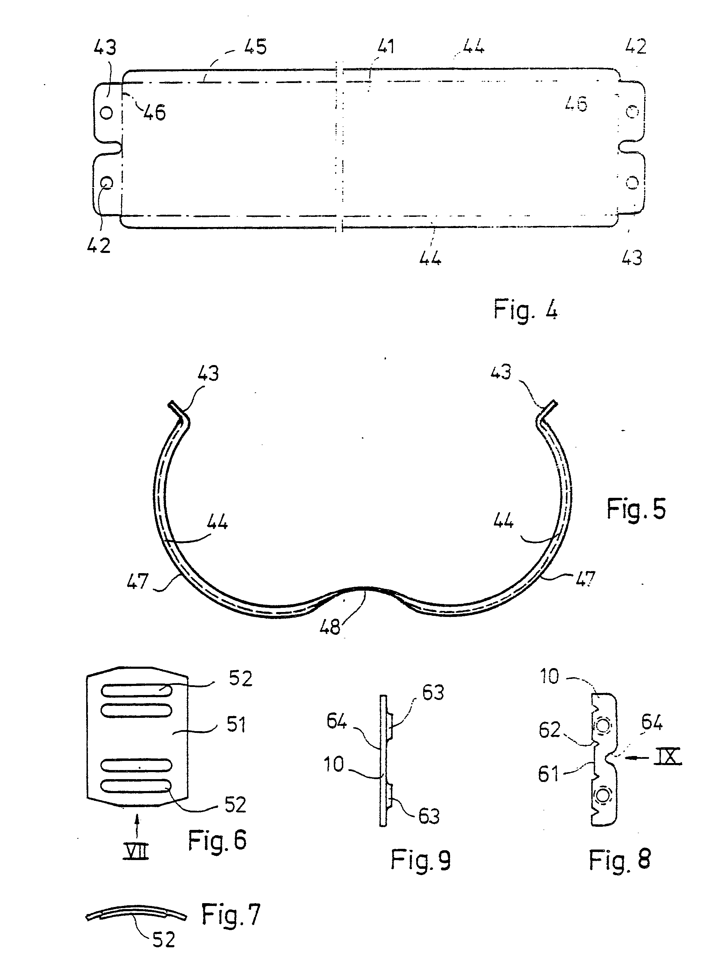

Bei der Herstellung des Spannringes wird von einem flachen Blechstreifen 41 ausgegangen, wie er in Fig. 4 dargestellt ist. Er kann mit Hilfe eines üblichen Schnittwerkzeuges aus Bandmaterial ausgeschnitten und an seinen Enden mit den Löchern 42 versehen werden, welche später von den Spannschrauben 8 durchdrungen werden, und im Bereich von zungenartigen Abschnitten 43 angeordnet sind, welche später die Laschen 7 bilden. In einem üblichen Biegewerkzeug wird dann der Blechstreifen 41 zu zwei Halbschalen 47 verformt. Gleichzeitig werden die im Bereich dieser Halbschalen liegenden Abschnitte des Randes 44 längs der strichpunktierten Linien 45 nach innen und die Zungen 43 längs der strichpunktierten Linien 46 nach außen abgewinkelt. Es entsteht dann das in Fig. 5 dargestellte Zwischenprodukt. Bei dem beschriebenen Arbeitsgang können auch noch die Sicken zur Versteifung der abgewinkelten Laschen 7 bzw. 43 an den Ecken eingedrückt werden, die längs der Linien 46 gebildet werden. Danach wird in einem weiteren Arbeitsgang der zwischen den Halbschalen verbliebene Bereich 48 derart verformt, daß die beiden Halbschalen sich zu dem im wesentlichen kreisförmigen Spannring ergänzen, und auch der im Übergangsbereich 48 zwischen den beiden Halbschalen liegende Abschnitt des Randes 44 abgewinkelt.

Zur Bildung der oben erwähnten Brücke kann ein im wesentlichen rechteckiges Blechteil 51 verwendet werden, wie es in den Fig. 6 und 7 dargestellt ist. Dieses Blechteil ist an seinen Ecken leicht abgeschrägt und weist sich in seiner Längsrichtung erstreckende Sicken 52 auf. Außerdem ist es, wie aus Fig. 7 ersichtlich, kreisbogenförmig gewölbt, so daß es sich der Krümmung des Spannringes anpaßt. Dieses Teil kann aus dem gleichen Material bestehen, wie der Spannring selbst, nämlich beispielsweise aus restfreiem Stahlblech mit einer Dicke von 0,5 mm. Es kann wiederum aus Bandmaterial hergestellt sein und mit einem einzigen, kombinierten Schnitt- und Drückwerkzeug hergestellt werden. Selbstverständlich ist auch ein mehrstufiger Herstellungsvorgang denkbar, bei dem beispielsweise das Teil 51 zunächst in der aus Fig. 6 ersichtlichen Form ausgeschnitten und anschließend gebogen und mit den Sicken versehen wird. Dieses Blechteil wird dann an einem Ende des Spannringes durch Widerstandsschweißen in einer solchen Lage befestigt, daß es bei angezogenem Spannring die beiden Enden des Spannringes im wesentlichen gleichmäßig untergreift.

Von den oben erwähnten Spannplatten ist die mit Gewindebohrungen versehene Spannplatte 10 in den Fig. 8 und 9 gesondert dargestellt. Sie besteht bei dem dargestellten Ausführungsbeispiel aus Stahlblech von 2,5 mm Dicke, das wiederum aus Bandmaterial in der aus Fig. 8 ersichtlichen Form ausgeschnitten werden kann. Die Kontur der Spannplatte ist der Kontur der Laschen angepaßt. Der dem Spannring zugewandte, geradlinige Rand 61 ist mit dreieckförmigen Aussparungen 62 versehen, welche die in den Spannring eingeprägten versteifenden Sicken 11 aufnehmen.

Beim Ausschneiden dieser Spannplatten oder in einem zusätzlichen Arbeitsgang wurden aus dem Material Tüllen 63 ausgeprägt, in die dann das Gewinde für die Spannschrauben eingeschnitten wurde. Die Spannplatte 9 unterscheidet sich von der Spannplatte 10 nur dadurch, daß die Tüllen 53 zu Durchgangslöchern für die Spannschrauben aufgebohrt wurden. Die Spannplatten werden so verwendet, daß sie mit ihren Tüllen in die Bohrungen der Laschen 7 des Spannringes eingreifen. Dadurch ist verhindert, daß die Spannschrauben mit ihren Gewinden mit den Rändern der Bohrungen in den Laschen in Eingriff kommen und beim Anspannen oder Lösen diese Laschen verformen oder gar zerstören.

Die Herstellung der beiden Teile eines zweiteiligen Spannringes kann ebenfalls ausgehend von einem Blechstreifen erfolgen, wie er in Fig. 4 dargestellt ist.

Dieser Blechstreifen kann dann in einem einzigen Arbeitsgang zu einer einzigen Halbschale verformt werden, die anschließend noch mit einem als Brücke dienenden Blechteil versehen wird. Zwei solcher Halbschalen können dann zu dem in Fig. 3 dargestellten, zweiteiligen Spannring vereinigt werden.

Die Erfindung wurde vorstehend an Hand zweier bevorzugter Ausführungsbeispiele beschrieben. Es versteht sich, daß die Erfindung nicht auf diese Ausführungsbeispiele beschränkt ist, sondern vielfältige Abwandlungen möglich sind, insbesondere bezüglich der Abmessungen und der Wahl des Materials zur Herstellung der Spannringe, Brücken und Spannplatten. Insbesondere können bei breiten Spannmuffen auch mehr als zwei und insbesondere vier Spannschrauben zur Verbindung der einander gegenüberstehenden Enden eines Spannringes Verwendung finden.

## Patentansprüche

1. Spannmuffe für Rohre, bestehend aus einem gummielastischen Dichtungsring (1) und einem den Dichtungsring umgebenden Spannring (5) in Form eines kreisförmig gebogenen Blechstreifens, an dessen einander gegenüberstehenden Enden radial nach außen gerichtete Laschen (7) angebogen sind, die Bohrungen für Spannschrauben aufweisen, und an deren Außenseiten je eine Spannplatte (9, 10) anliegt, von denen die eine Durchgangsbohrungen und die andere Gewindebohrungen für die Spannschrauben (8) aufweist, dadurch gekennzeichnet, daß die Längsränder des Spannringes (5) radial nach innen abgewinkelte Stege (6) bilden, die an den Stirnflächen des Dichtungsringes (1) anliegen, die Laschen (7) in ihrer Mitte geteilt sind (Spalt 14) und die Spannplatten (9, 10) eine entsprechende Aussparung (64) aufweisen.

2. Spannmuffe nach Anspruch 1, dadurch gekennzeichnet, daß die Bohrungen in den Spannplatten (9, 10) im Bereich von ausgestülpten Tüllen (63) angeordnet sind, die in die Bohrungen der Laschen (7) des Spannringes (5) eingreifen.

3. Spannmuffe nach Anspruch 1 oder 2, dadurch gekennzeichnet, daß in die von den Laschen (7) und den angrenzenden Abschnitten des Blechstreifens (41) gebildeten Ecken versteifenden Sicken (11) eingeprägt sind.

4. Spannmuffe nach einem der vorhergehenden Ansprüche, dadurch gekennzeichnet, daß der Spalt zwischen den Enden des Spannringes (5) von einer an den Innenseiten des Spannringes anliegenden Brücke (12) überbrückt wird.

5. Spannmuffe nach Anspruch 4, dadurch gekennzeichnet, daß die Brücke (12) von einem Ende des Spannringes (5) verschweißten Blechteil (51) gebildet wird.

6. Spannmuffe nach einem der vorhergehenden Ansprüche, dadurch gekennzeichnet, daß der Spannring aus zwei jeweils annähernd einen Halbkreis bildenden Teilen (21, 22) besteht, die beide an ihren Enden angebogene Laschen (23, 24) aufweisen, an denen je eine Spannplatte (25, 26) anliegt.

7. Verfahren zum Herstellen des Spannringes einer Spannmuffe nach einem der Ansprüche 1 bis 6, dadurch gekennzeichnet, daß in einem ersten Arbeitsgang ein Blechstreifen (41), der an seinen Enden je zwei zungenartige Abschnitte (43) und an seinen seitlichen Rändern über die zungenartige Abschnitte (43) überstehende Randabschnitte (44) aufweist, ausgeschnitten und im Bereich der zungenartigen Abschnitte (43) gelocht wird, daß dann unter gleichzeitigem Abwinkeln der Randabschnitte (44) und der zungenartigen Abschnitte (43) der Blechstreifen zu zwei Halbschalen (47) gebogen wird und danach die beiden Halbschalen in eine kreisrunde Form fertiggebogen werden, derart, daß beim Biegen der Halbschalen (47) nur die in deren Bereich liegenden Abschnitte der Ränder (44) und erst beim Fertigbiegen der Halbschalen zur kreisrunden Form die im Übergangsbereich zwischen den beiden Halbschalen (47) liegenden Randabschnitte abgewinkelt werden.

8. Verfahren nach Anspruch 7, dadurch gekennzeichnet, daß vor dem Fertigbiegen der beiden Halbschalen (47) zur kreisrunden Form in die von den abgewinkelten Laschen (43) und den angrenzenden Abschnitten des Blechstreifens (41) gebildeten Ecken versteifende Sicken (11) eingeprägt werden.

9. Verfahren nach Anspruch 7 oder 8, dadurch gekennzeichnet, daß mit einem Ende des fertig gebogenen Spannringes ein an dessen Innenseite anliegendes Blechteil (51) verschweißt wird, das zuvor kreisbogenförmig gebogen und gegebenenfalls mit eingeprägten Sicken (52) versehen worden ist und den Spalt zwischen den Enden des Spannringes überbrückt.

## Claims

1. Clamping socket for pipes, consisting of a rubber-elastic sealing ring (1) and a clamping ring (5) which encircles the sealing ring and is in the form of a circularly bent sheet-metal strip, on the opposite ends of which lugs (7) are bent which point radially outwards and have holes for clamping screws and on the outer side of which sits one clamping plate (9, 10) each, one of which has through holes and the other tapped holes for the clamping screws (8), characterised in that the longitudinal edges of the clamping ring (5) has webs (6) which are bent radially inwards and sit against the end faces of the sealing ring (1), the lugs (7) are divided at their centre (gap 14) and the clamping plates (9, 10) have a corresponding recess (64).

2. Clamping socket according to claim 1, characterised in that the holes in the clamping plates (9, 10) are arranged in the area of turned-out lips (63) which engage in the holes of the lugs (7) of the clamping ring (5).

3. Clamping socket according to Claim 1 or 2, characterised in that stiffening beads (11) are embossed into the corners formed by the lugs (7) and the adjacent sections of the sheet-metal strip (41).

4. Clamping socket according to one of the preceding Claims, characterised in that the gap between the ends of the clamping ring (5) is spanned by a bridge (12) sitting against the inner sides of the clamping ring.

5. Clamping socket according to Claim 4, characterised in that the bridge (12) is formed by a sheet-metal part (51) welded to one end of the clamping ring (5).

6. Clamping socket according to one of the preceding Claims, characterised in that the clamping ring consists of two parts (21, 22) each of which forms an approximate semi-circle and both of which have lugs (23, 24) which are bent at their ends and against each of which sits a clamping plate (25, 26).

7. Method for manufacturing the clamping ring of a clamping socket according to one of Claims 1 to 6, characterised in that, in a first operation, a sheet-metal strip (41), which, at its ends, has two tongue-like sections (43) each and, at its lateral edges, edge sections (44) projecting beyond the tongue-like sections (43), is cut out and perforated in the area of the tongue-like sections (43), that the sheet-metal strip is then bent into two half-shells (47) by bending at the same time the edge sections (44) and the tongue-like sections (43) and the two half-shells are subsequently finish-bent into a circular shape in such a way that, during the bending of the half-shells (47), only the sections of the edges (44) located in the area of the half-shells are bent, and the edge sections located in the transition area between the two half-shells (47) are bent only when the half-shells are being finish-bent into the circular shape.

8. Method according to Claim 7, characterised in that, before the finish-bending of the two half-shells (47) into the circular shape, stiffening beads (11) are embossed into the corners formed by the bent lugs (43) and the adjacent sections of the sheet-metal strip (41).

9. Method according to Claims 7, or 8, characterised in that a sheet-metal part (51) which sits against the inside of the finish-bent clamping ring is welded to one end of the latter, which sheet-metal part (51) has been bent in the shape of a circular arc and if necessary provided with embossed beads (52) and spans the gap between the ends of the clamping ring.

## Revendications

1. Manchon de serrage pour tuyaux, composé d'un anneau de garniture élastique en caoutchouc (1) et d'un collier tendeur (5) en forme de ruban de tôle courbe ceignant l'anneau de garniture, dont les extrémités situées en vis-à-vis sont courbées en languettes/couvre-joints (7) orientées radialement vers l'extérieur et présentant des forures pour les vis de serrage, une plaque/taque de serrage (9, 10) adhérant à leur côté extérieur, dont l'une est pourvue de forures traversantes et l'autre de forures taraudées pour les vis de serrage (8), caractérisé en ce que les bords longitudinaux du collier tendeur (5) forment des barrettes courbées radialement (6) vers l'intérieur qui adhèrent à la surface de l'anneau de garniture (1) et en ce que les languettes (7) sont fendues au milieu (fente 14) et que les plaques de serrage (9, 10) présentent un évidement (64) correspondant.

2. Manchon de serrage selon la revendication 1, caractérisé en ce que les forures sur les plaques de serrage (9, 10) sont aménagées dans des douilles protubérantes (63) qui engrènent sur les forures des languettes (7) du collier tendeur (5).

3. Manchon de serrage selon revendication 1 ou 2, caractérisé en ce que des moulures renforçantes (11) sont estampées sur les angles formés par les languettes (7) et les sections adjacentes du ruban de tôle (41).

4. Manchon de serrage selon l'une des revendications précédentes, caractérisé en ce que la fente entre les extrémités du collier tendeur (5) est fermée par un pont de jonction (12) adhérant aux côtés intérieurs du collier tendeur.

5. Manchon de serrage selon la revendication 4, caractérisé en ce que le pont de jonction (12) est formé par un morceau de tôle (51) soudé sur une extrémité du collier tendeur (5).

6. Manchon de serrage selon l'une des revendications précédentes, caractérisé en ce que le collier tendeur est composé de deux parties (21, 22) d'une forme proche d'un demi-cercle, dont chacune présente à ses extrémités des languettes (23, 24) courbes, auxquelles adhère une plaque de serrage (25, 26).

7. Procédé de fabrication du collier tendeur d'un manchon de serrage selon l'une des revendications 1 à 6, caractérisé en ce que la première opération consiste à découper un ruban de tôle (41) dont les extrémités présentent deux sections en forme de languettes (43) et les bords longitudinaux des segments à rebord (44) qui dépassent les sections en forme de languettes (43), et à le perforer à la hauteur des sections en forme de languettes (43), puis à plier le ruban en tôle en deux demi-coques (47) en repliant en même temps les segments à rebord (44) et les sections en forme de languettes (43), les deux demi-coques étant ensuite pliées en forme circulaire, de manière que, lors du pliage en demi-coques (47), seulement les segments à rebord (44) se trouvant dans leur zone seront courbés, tandis que les segments à rebord se trouvant dans la zone de jonction entre les deux demi-coques (47) seront repliés lors du pliage final en forme circulaire des demi-coques.

8. Procédé selon revendication 7, caractérisé en ce que des moulures renforçantes (11) sont estampées dans les angles formés par les languettes courbes (43) et les sections adjacentes du ruban en tôle (41) avant le pliage final en forme circulaire des deux demi-coques (47).

9. Procédé selon revendication 7 ou 8, caractérisé en ce qu'un morceau de tôle (51) préalablement plié en arc de cercle et pourvu le cas échéant de moulures estampées (52) est soudé sur une extrémité du collier tendeur fini, adhérant à son côté intérieur et fermant la fente entre les extrémités du collier tendeur.

Fig. 1

Fig. 2

Fig. 3

Fig. 4

Fig. 5

Fig. 6

Fig. 9

Fig. 8

Fig. 7